# EUROPEAN PATENT APPLICATION

(11) **EP 1 038 425 A2**
(43) Date of publication of application: **27.09.2000**
(21) Application number: 00200307.7
(22) Date of filing: 28.01.2000
(51) Int. Cl.: A01C 1/08

(54) **Method of disinfecting seed**

(30) Priority: 26.02.1999 NL 1011400
(71) Applicant: Filtermat Beheer BV, 4794 SN Heijningen (NL)
(72) Inventor: van Schouwen, Hers Hersterus Jacob, 4661 BC Halsteren (NL); Tukkers, Antony, 3421 CE Oudewater (NL)
(74) Representative: Kupecz, A., Drs. c.s.

(57) **Abstract**

The invention relates to a method of disinfecting seed, wherein the seed is treated with ozonic gas. Preferably the seed is treated while it is dry and at ambient temperature. It is especially favourable if the seed previous to treatment is placed into vacuum, usually for 2-40, the vacuum pressure generally being 2-40 mm Hg. As a rule the ozonic gas is air. The ozonic gas contains per litre 100-200 p.p.m. of ozone. Treatment with the ozonic gas lasts 2-40 minutes. It is also possible to treat the seed with the ozonic gas while it is suspended in water.

## Description

The present invention relates to a method of disinfecting seeds.

It is generally known that seeds readily become infected with bacteria and/or viruses, which has the unfavourable effect that the vitality of the seeds can deteriorate, which may lead to a diminishing germination power of the seeds. One thing and another results in a relatively large percentage of seeds not germinating after sowing, involving a not inconsiderable loss.

If one takes into consideration that some seeds, for instance tomato seeds, are very expensive, costing per kilo approximately 10,000 guilders, it becomes obvious that it is of the utmost importance to ensure that the sown seed will germinate optimally.

Although agricultural seed such as wheat, maize, etc. is less expensive per kilo, the economic aspects also play an important role because of the large quantities in which such seeds are used. Another important factor with precision sowing is that all seeds must germinate, since otherwise the sown ground will become irregular, which is undesirable.

It is therefore of great importance that the seed is sterilized before sowing. According to the standard technique this is done by means of either liquid or solid chemical sterilizing agents. Another known method is to pill the seeds, whereby the seed is first contacted with a solution or suspension of sterilizing agent and the liquid is subsequently evaporated. The seed thus obtained is pilled, that is to say it is provided with a shell. However, it is also possible to incorporate the sterilizing agent in the material of the shell.

The pilling technique was in fact developed for precision sowing of small seed, such as tomato, celery, etc.

It has been shown that the germinating power of the seed decreases when the seed has previously been treated with liquid containing sterilizing agent.

It is now the object of the invention to provide a method of sterilizing seed, wherein after sterilization of the seed the germination power is completely maintained.

To this end the invention provides a method of sterilizing seeds, characterized in that the seed is treated with ozonic gas.

Surprisingly, it has been shown that after treating the seed with ozonic gas according to the invention, the germination power remains practically entirely intact, which means, that practically all the sown seed germinates.

Particularly good results were obtained when the seed was treated with ozonic gas while dry.

According to the invention, it is preferred to treat the seed with ozonic gas at ambient temperature.

Surprisingly, it has been shown that better sterilization results are obtained when the seed, previous to treatment with ozonic gas, is placed into vacuum.

Due to the vacuum, the air is removed from the pores of the seed, allowing the ozone to penetrate into the pores of the seed where it can exercise its sterilizing activity. This is particularly important because, as is known, ozone is only active for a relatively short period of time.

According to the invention, the vacuum is usually maintained 2 to 40 minutes, at a vacuum pressure of 2 to 40 mm Hg. Subsequent to interrupting the vacuum, the seed is brought to atmospheric pressure with the ozonic gas.

Usually one uses air as the ozonic gas.

Preferably the gas contains per litre 100 to 2000 p.p.m. of ozone

If ozone concentrations considerably higher than 2000 p.p.m./l are used, the seed will burn.

The treatment of the seed with the ozonic gas usually lasts 20-40 minutes.

However, previous to treating the seed with ozonic gas, it is also possible to first suspend the seed in water and subsequently to feed the ozonic gas into the suspension.

To obtain the ozonic gas, use was made of a standard ozone generator. This handy device, measuring 40 x 40 x 20 cm, has a maximum power consumption of 50 W at 220 V and 50-60 Hz, and a maximum ozone production of 0.65 g O₃/h at an airflow of 700 l/h . As the experiment was carried out on a smaller scale, the air flow through the ozonizer during the experiments was limited to 50 l/h. In the experiment below, in which use was made of an air flow through the ozonizer of 50 l/h, the seed was introduced into a vacuum vessels, where it was maintained under vacuum for approximately 30 minutes. Subsequently the vacuum vessel was brought to atmospheric pressure with the thus produced ozonic air.

The invention will now be elucidated with reference to the following non-limitative example.

### Example

In accordance with the invention, seed infected with bacteria was treated in a 500 ml Erlenmeyer with the ozonic air containing 1000 p.p.m. of ozone. The treatment lasted 15 minutes. When the thus treated seeds were examined, the bacteria were shown to be dead.

## Claims

1. A method of disinfecting seeds, **characterized** in that the seed is treated with ozonic gas.

2. A method according to claim 1, **characterized** in that the seed is treated with ozonic gas while it is dry.

3. A method according to claim 1 or 2, **characterized** in that the seed is treated at ambient temperature.

4. A method according to claims 1-3, **characterized** in that the seed previous to treatment is placed into vacuum.

5. A method according to claim 4, **characterized** in that the seed is maintained under vacuum for 2-40 minutes.

6. A method according to claim 5, **characterized** in that the vacuum pressure is 2-40 mm Hg.

7. A method according to claims 1-6, **characterized** in that the ozonic gas is air.

8. A method according to claim 7, **characterized** in that the gas contains per litre 100-200 p.p.m. of ozone.

9. A method according to claims 1-8, **characterized** in that the seed is treated with the ozonic gas for 2-40 minutes.

10. A method according to claim 1, **characterized** in that treatment with the ozonic gas is carried out while the seed is suspended in water.
